# FASCICULE DE BREVET EUROPEEN

(11) **EP 3 993 608 B1**
(45) Date de publication et mention de la délivrance du brevet: **25.02.2026**
(21) Numéro de dépôt: 20736306.0
(22) Date de dépôt: 30.06.2020
(51) Int. Cl.: A01G 31/02, A01G 9/08, A01G 31/06, A01G 9/24

(54) **SYSTÈME ET PROCÉDÉ DE CULTURE**
ANBAUSYSTEM UND -VERFAHREN
CULTIVATION SYSTEM AND METHOD

(30) Priorité: 01.07.2019 FR 1907253
(43) Date de publication de la demande: 11.05.2022
(73) Titulaire: Farm3, 25000 Besançon (FR)
(72) Inventeur: SCHMITT, Romain, 75116 Paris (FR)
(74) Mandataire: Icosa
(86) Numéro de dépôt international: PCT/EP2020/068387
(87) Numéro de publication internationale: WO 2021/001361

(56) Documents cités:
- US-A1- 2002 088 173
- US-A1- 2012 324 788
- US-A1- 2018 014 471
- US-A1- 2018 146 618
- US-A1- 2019 021 238

## Description

### Domaine technique

La présente invention concerne un système de culture. Elle concerne aussi un procédé de culture.

Un tel système permet à un utilisateur de cultiver des plantes. Le domaine de l'invention est plus particulièrement mais de manière non limitative celui de la culture verticale.

### Etat de la technique antérieure

US 2012/324788 A1 décrit un appareil pour cultiver des plantes, dans lequel plusieurs étagères de rangement sont superposées pour économiser de l'espace.

US 2002/088173 A1 décrit un système automatisé pour fournir un rendement continu de produits agricoles frais.

US 2018/146618 A1 décrit des robots pour la récolte autonome de cultures hydroponiques avec différentes récolteuses.

La culture verticale définie la culture de plantes dans des bacs disposés les uns au-dessus des autres, pouvant aller typiquement jusqu'à 10 mètres de haut. Dans ces conditions, l'entretien des plantes situées en hauteur nécessite pour le cultivateur une échelle ou un élévateur à fourche (« forklift » en anglais) ce qui a les inconvénients suivants :
- ceci est peu confortable pour l'exercice de son travail,
- ceci peut être dangereux, et
- ceci représente une perte d'espace dans la ferme nécessaire pour le laisser manipuler.

Dans le cas où la ferme est composée de plusieurs allées de plantes, il faut de plus laisser un espace entre les rangées de plantes pour permettre la circulation du cultivateur et de l'engin qui lui permet de monter aux bacs en hauteurs (minimum 1m entre chaque rangée).

Dans le cas d'une culture hors-sol et sans pesticide, on a en outre l'inconvénient suivant :
- les plantes sont d'autant plus vulnérables aux pathogènes (virus, bactéries, larves) qui sont transportés par l'air ou véhiculés par le cultivateur.

Il est possible de rajouter un sas de stérilisation pour éviter la contamination des plantes, mais cela a les inconvénients suivants :
- cela implique une perte d'espace,
- cela implique une complexité pour le cultivateur et
- cela implique une perte de temps sur son travail.

Dans un concept où des petites fermes sont destinées à être déployées en des endroits très divers du monde, cela demanderait de trouver des cultivateurs sur place et de les former, mais cela a l'inconvénient suivant :
- cela limite le déploiement des fermes aux pays où la main d'œuvre est déjà disponible.

Or en supprimant ce biais, on pourrait déployer des fermes dans des déserts où la population réduite n'a pas accès à certaines denrées (par un climat défavorable par exemple).

Le but de la présente invention est de de résoudre ou diminuer au moins un des inconvénients susmentionnés.

### Exposé de l'invention

Cet objectif est atteint avec un système de culture selon la revendication 1.

Les moyens d'affichage comprennent de préférence un casque et/ou des lunettes agencés pour afficher l'image à un utilisateur.

Les moyens de commande comprennent de préférence le casque et/ou les lunettes, agencés pour déplacer les moyens de visualisation en fonction d'un mouvement du casque et/ou lunettes.

Les moyens de visualisation comprennent de préférence une caméra disposée sur le bras robotisé, de préférence à l'extrémité du bras robotisé équipé de l'au moins un outil.

Les moyens de visualisation sont de préférence agencés pour imager des objets en l'absence de rayonnement visible compris entre 400 et 800 nm.

Les moyens de visualisation peuvent être agencés pour capter une image des emplacements selon un angle solide d'au moins 2n stéradians, de préférence selon un angle solide de 4n stéradians.

Les moyens de commande comprennent de préférence des moyens pour commander un déplacement du bras robotisé entre les différents emplacements, verticalement et/ou horizontalement.

L'au moins un espace de culture est de préférence un espace de culture vertical, comprenant au moins un empilement vertical d'emplacements pour des plantes, de préférence plusieurs rangées d'empilements verticaux d'emplacements pour des plantes.

Les moyens de déplacement comprennent de préférence des rails horizontaux et/ou des rails verticaux le long desquels le bras robotisé est agencé pour se déplacer.

L'au moins un espace de culture est de préférence un espace clos.

L'au moins un espace de culture comprend de préférence des moyens de régulation et/ou des moyens de mesure d'au moins un paramètre physique au sein de cet espace de culture, tel qu'une température, une humidité, un taux de CO₂, une mesure de spectrométrie, une luminosité, et/ou un taux d'éthylène.

Les moyens d'affichage sont de préférence en outre agencés pour afficher l'au moins un paramètre physique mesuré.

Chaque espace de culture comprend de préférence un tiroir agencé pour passer entre :
- une position interne pour lequel le contenant du tiroir est accessible depuis l'intérieur de cet espace de culture mais inaccessible depuis l'extérieur de cet espace de culture, et
- une position externe pour lequel le contenant du tiroir est accessible depuis l'extérieur de cet espace de culture mais inaccessible depuis l'intérieur de cet espace de culture,

le bras robotisé de cet espace de culture étant de préférence agencé pour cueillir plantes et/ou produits dans cet espace de culture et les déposer dans le contenant du tiroir dans sa position interne,
le tiroir comprenant de préférence en outre des moyens de stérilisation agencés pour stériliser le contenant du tiroir, de préférence par rayonnement ultra-violet, lorsque le tiroir passe de sa position externe à sa position interne.

Le système selon l'invention comprend de préférence plusieurs espaces de culture distincts, le poste de commande étant partagé pour tous les espaces de culture.

Le système selon l'invention comprend en outre :
- des moyens pour construire une base de données comprenant, pour chaque plante et/ou produit d'une plante, un suivi dans le temps :
   * d'images de cette plante et/ou produit, et/ou
   * de paramètres physiques mesurés sur cette plante ou ce produit, et
- des moyens pour déterminer un statut de cette plante ou produit et/ou une action recommandée pour cette plante ou produit à partir des données de la base de données.

Le système selon l'invention comprend des moyens pour analyser des actions, sur la plante ou produit, d'un utilisateur du poste de commande, et des moyens d'apprentissage informatiques et/ou électroniques d'une action recommandée à effectuer sur une plante ou produit en fonction de son statut.

Les moyens de commande sont agencés pour commander le bras robotisé selon l'action recommandée sans intervention d'un utilisateur.

Les moyens d'affichage sont de préférence en outre agencés pour afficher le statut ou l'action recommandée concernant la plante ou produit imagé par les moyens de visualisation.

Chaque plante est de préférence identifiée dans l'au moins un espace de culture par un code-barres.

Suivant encore un autre aspect de l'invention, il est proposé un procédé de culture selon la revendication 13.

Chaque espace de culture comprend de préférence en outre des moyens de visualisation captant une image des emplacements et/ou du bras robotisé de cet espace de culture, le poste de commande comprenant des moyens d'affichage affichant cette image.

Les moyens d'affichage comprennent de préférence un casque et/ou des lunettes affichant l'image à un utilisateur.

Les moyens de commande comprennent de préférence le casque et/ou les lunettes, le procédé comprenant de préférence en outre un déplacement des moyens de visualisation en fonction d'un mouvement du casque et/ou des lunettes.

Les moyens de visualisation comprennent de préférence une caméra disposée sur le bras robotisé, de préférence à l'extrémité du bras robotisé équipé de l'au moins un outil.

Les moyens de visualisation imagent de préférence des objets en l'absence de rayonnement visible compris entre 400 et 800 nm.

Les moyens de visualisation peuvent capter une image des emplacements selon un angle solide d'au moins 2n stéradians, de préférence selon un angle solide de 4n stéradians.

Les moyens de commande commandent de préférence un déplacement du bras robotisé entre les différents emplacements, verticalement et/ou horizontalement.

L'au moins un espace de culture est de préférence un espace de culture vertical, comprenant au moins un empilement vertical d'emplacements pour des plantes, de préférence plusieurs rangées d'empilements verticaux d'emplacements pour des plantes.

Les moyens de déplacement comprennent de préférence des rails horizontaux et/ou des rails verticaux le long desquels le bras robotisé se déplace.

L'au moins un espace de culture est de préférence un espace clos.

L'au moins un espace de culture comprend de préférence des moyens qui régulent et/ou mesurent au moins un paramètre physique au sein de cet espace de culture, tel qu'une température, une humidité, un taux de CO₂, une mesure de spectrométrie, une luminosité, et/ou un taux d'éthylène.

Les moyens d'affichage affichent de préférence l'au moins un paramètre physique mesuré.

Chaque espace de culture comprend de préférence un tiroir qui passe entre :
- une position interne pour lequel le contenant du tiroir est accessible depuis l'intérieur de cet espace de culture mais inaccessible depuis l'extérieur de cet espace de culture, et
- une position externe pour lequel le contenant du tiroir est accessible depuis l'extérieur de cet espace de culture mais inaccessible depuis l'intérieur de cet espace de culture,

le bras robotisé de cet espace de culture cueillant des plantes et/ou produits dans cet espace de culture et les déposant dans le contenant du tiroir dans sa position interne,
le tiroir comprenant de préférence en outre des moyens de stérilisation stérilisant le contenant du tiroir, de préférence par rayonnement ultra-violet, lorsque le tiroir passe de sa position externe à sa position interne.

Le procédé de l'invention est réalisé selon la revendication 13.

Le procédé selon l'invention est mis en œuvre dans un système comprenant plusieurs espaces de culture distincts, le poste de commande étant partagé pour tous les espaces de culture.

Dans le procédé selon l'invention :
- des moyens construisent une base de données comprenant, pour chaque plante et/ou produit d'une plante, un suivi dans le temps :
   * d'images de cette plante et/ou produit, et/ou
   * de paramètres physiques mesurés sur cette plante ou ce produit, et
- des moyens déterminent un statut de cette plante ou produit à partir des données de la base de données.

Le procédé selon l'invention comprend une analyse des actions, sur la plante ou produit, d'un utilisateur du poste de commande, et un apprentissage informatique et/ou électronique d'une action recommandée à effectuer sur une plante ou produit en fonction de son statut.

Les moyens de commande commandent le bras robotisé selon l'action recommandée sans intervention d'un utilisateur.

De préférence, les moyens d'affichage affichent en outre le statut ou l'action recommandée concernant la plante ou produit imagé par les moyens de visualisation.

Chaque plante est de préférence identifiée dans l'au moins un espace de culture par un code-barres.

### Description des figures et modes de réalisation

D'autres avantages et particularités de l'invention apparaîtront à la lecture de la description détaillée de mises en œuvre et de modes de réalisation nullement limitatifs, et des dessins annexés suivants :
**[****Fig. 1****]** la figure 1 est une vue schématique d'un premier mode de réalisation de système 1 selon l'invention, qui est le mode de réalisation préféré de l'invention,
**[****Fig. 2****]** la figure 2 est une vue schématique d'un procédé d'apprentissage mis en œuvre par le premier mode de réalisation du système 1 selon l'invention,
**[****Fig. 3****]** la figure 3 est une vue en perspective de moyens de déplacement 2 du système 1,
**[****Fig. 4****]** la figure 4 est une vue en perspective d'un espace de culture 3 du système 1,
**[****Fig. 5****]** la figure 5 est une vue en perspective d'un bras robotisé 4 du système 1,
**[****Fig. 6****]** la figure 6 est une vue en perspective du bras robotisé 4 du système 1, équipé d'une première variante d'outil 5,
**[****Fig. 7****]** la figure 7 est une vue en perspective du bras robotisé 4 du système 1, équipé d'une deuxième variante d'outil 5, et
**[****Fig. 8****]** la figure 8 est une vue en perspective du bras robotisé 4 du système 1, équipé d'une troisième variante d'outil 5.

Ces modes de réalisation n'étant nullement limitatifs, on pourra notamment considérer des variantes de l'invention ne comprenant qu'une sélection de caractéristiques décrites ou illustrées par la suite isolées des autres caractéristiques décrites ou illustrées (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

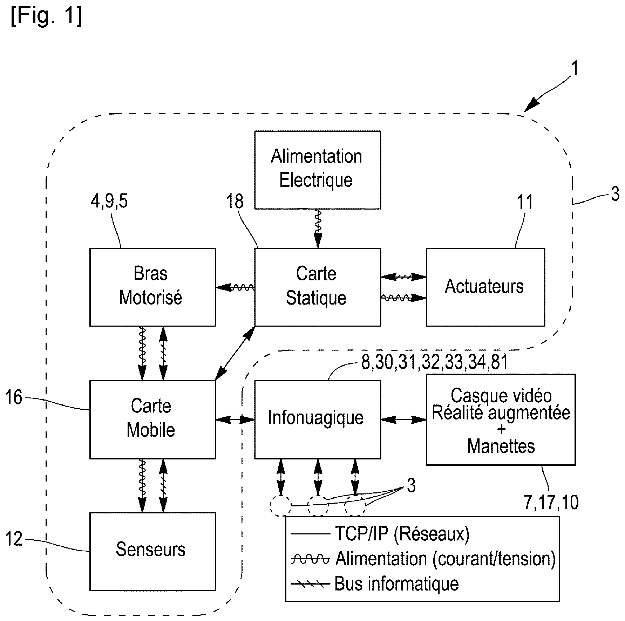

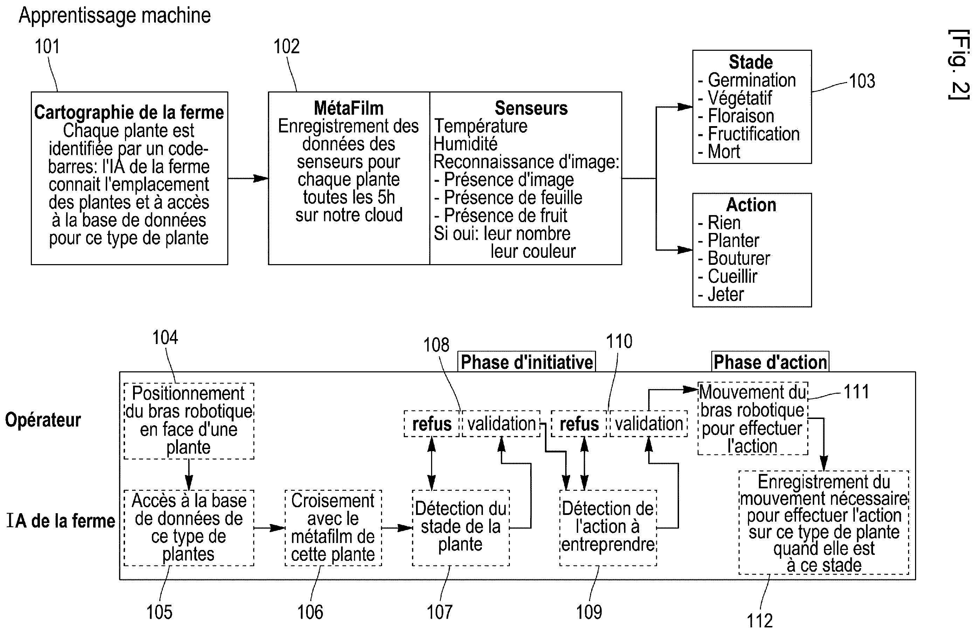

On va tout d'abord décrire, en référence aux figures 1 à 8, un premier mode de réalisation de système selon l'invention 1.

Le système de culture 1 comprend au moins un espace de culture 3.

On va par la suite décrire un espace de culture 3, considérant que tous les espaces 3 comprennent les mêmes caractéristiques que l'espace 3 décrit par la suite et que la description du système 1 ou procédé selon l'invention restera valable en remplaçant l'espace de culture 3 ou ferme 3 par « l'au moins un(e) ferme ou espace de culture » ou « chaque ferme ou espace de culture ».

L'espace de culture 3 comprend différents emplacements 6 pour des plantes.

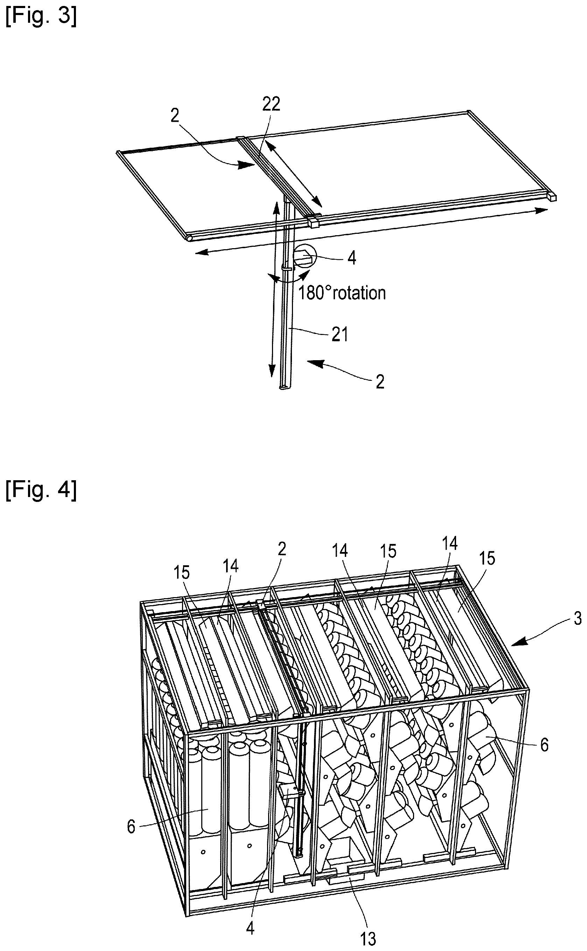

Sur la figure 4, chaque forme cylindrique référencée 6 illustre un volume d'occupation maximum prévue pour la plante située à cet emplacement 6.

Sur la figure 4, on note aussi que l'espace de culture 3 comprend des sources de lumière 14 (comprenant typiquement des Diodes Electro Luminescentes ou DELs) agencées pour émettre de la lumière 15, comprenant au moins une longueur d'onde entre 400 nm et 800nm, de préférence au moins une longueur d'onde entre 410 nm et 490 nm et/ou entre 560 nm et 660 nm, de préférence au moins une longueur d'onde entre 410 nm et 490 nm et au moins une longueur d'onde entre 560 nm et 660 nm.

L'espace de culture 3 comprend un bras robotisé 4 équipé d'au moins un outil 5.

L'au moins un outil 5 comprend :
- des moyens de préhension agencés pour manipuler des plantes et/ou produits de ces plantes disposées dans les emplacements 6, et/ou
- au moins un outil 5 de jardinage parmi ciseaux, panier, scie, pince, cage à fruit, etc.

La ferme 3 comprend plusieurs outils 5 qui sont interchangeables sur le bras 4.

Par bras robotisé, on entend un ensemble de pièces mécaniques reliées par au moins une articulation dont le mouvement est assuré par au moins un moteur.

Le bras 4 est un bras comprenant 6 degrés de liberté.

Le bras est par exemple basé sur un bras de référence « DOBOT ^{®} Magician ».

Il pèse environ 3 kg.

Il est rétractable, et a une longueur rétracté de 15cm et allongé de 84 cm.

Il peut soulever environ 300 g.

Il est équipé des moyens de visualisation 9 décrits par la suite.

Le bras 4 est équipé de senseurs 12 décrits par la suite, dont par exemple un capteur de température, un capteur de CO₂, un capteur d'humidité, un capteur de luminosité, et/ou un capteur de maturité des fruits (par spectrométrie).

Les senseurs 12 embarqués sur le bras 4 sont ainsi au plus près des emplacements 6.

L'espace de culture 3 comprend des moyens de déplacement 2 agencés pour déplacer le bras robotisé 4 entre ces différents emplacements 6.

Le système de culture 1 comprend des moyens de communication 8 électroniques et/ou informatiques. Les moyens de communication 8 comprennent par exemple des moyens nuagiques ou d'informatique en nuage 81 (aussi appelés « cloud » ou « cloud computing means » en anglais.

Le système de culture 1 comprend un poste de commande 7 distant de l'espace de culture 3 et comprenant des moyens de commande 17 agencés pour commander le bras robotisé 4 de l'espace de culture 3 via les moyens de communication 8, les moyens de commande 17 étant agencés pour commander les moyens de déplacement 2 de manière à déplacer le bras robotisé 4 de cet espace de culture 3 entre les différents emplacements 6 de cet espace de culture 3 et/ou pour commander des actions (telle que saisir un objet, manipuler (et/ou planter, bouturer, cueillir, jeter) une plante et/ou un produit d'une plante, faire une mesure par un senseur 12 embarqué sur le bras 4, actionner un outil 5 du bras 4, etc.) du bras robotisé 4 de cet espace de culture 3.

La ferme 3 et le poste de commande 7 sont distants.

Les moyens de communication 8 relient la ferme 3 et le poste de commande 7.

Le contrôle à distance permet un gain de place dans la ferme 3 (il n'y a pas d'humain nécessaire en présentiel dans la ferme 3). Cela permet également d'éviter l'entrée de pathogènes et de pesticides qui pourraient entrer avec les aller-retours effectués par les fermiers.

L'espace de culture 3 comprend en outre des moyens de visualisation 9 agencés pour capter une image des emplacements 6 et/ou du bras robotisé 4 de cet espace de culture 3, le poste de commande 7 comprenant des moyens d'affichage 10 agencés pour afficher cette image.

Ces moyens de visualisation 9 comprennent une caméra, par exemple de référence « intelrealsense D435i ^{®} ».

La caméra 9 est une caméra tridimensionnelle ou « 3D » qui voit :
- à au moins 180° (i.e. qui image au moins 2n stéradians) ou à 360° (i.e. qui image 4n stéradians) au bout du bras robotique 4, l'utilisateur cultivateur pouvant alors voir entre les feuillages de l'espace 3 depuis le poste de commande 7, ce qui serait impossible en présentiel, où il ne verrait que la surface de la canopée, ou
- à moins de 180° (i.e. qui image moins 2n stéradians), pour diminuer les temps de latence de l'affichage de l'image sur les moyens d'affichage 10.

Les moyens d'affichage 10 comprennent un casque et/ou des lunettes (typiquement un dispositif de réalité virtuelle) agencé(e)s pour afficher l'image à un utilisateur sur ce casque et/ou sur ces lunettes. L'utilisation de casque à réalité virtuelle 10 permet une immersion dans la ferme et une visite de celle-ci par des usagers qui souhaiterait en voir le fonctionnement en temps réel. Cela peut servir comme objet marketing ou éducatif.

Les moyens d'affichage 10 et/ou les moyens 30, 31, 32, 33, et/ou 34 peuvent modifier ou être agencés pour modifier l'image captée par les moyens 9 avant de l'afficher, typiquement de sorte que les murs et/ou des éléments ou structures de la ferme 3 sont modélisés en trois dimensions (pour donner l'impression, par exemple, d'être dans un espace plus grand qu'il n'y parait et/ou éclairé par une lumière naturelle) et/ou de sorte que le seul objet dynamique retranscrit en temps réel est la plante imagée à son emplacement 6 par les moyens 9. L'utilisateur peut donc choisir en se connectant à la ferme 3 la plante dont il souhaite s'occuper, via un menu affiché à l'écran 10. Celle-ci apparait alors devant lui, en flux en direct. Pour s'intégrer dans cet environnement virtuel, la plante est découpée du flux en direct ( ou « livefeed ») et insérée dans l'environnement virtuel.

L'espace de culture 3 est un espace de culture vertical, comprenant au moins un empilement vertical d'emplacements 6 pour des plantes, de préférence plusieurs rangées d'empilements verticaux d'emplacements 6 pour des plantes. Chaque empilement vertical fait typiquement 3 mètres de haut.

Les moyens de déplacement 2 comprennent des rails horizontaux et/ou des rails verticaux le long desquels le bras robotisé 4 est agencé pour se déplacer grâce à des moteurs. Ceci permet d'éliminer le problème d'espace en hauteur, en permettant au bras 4 de monter du niveau du sol jusqu'à plusieurs mètres de haut. Pour éliminer le problème d'espace entre les rangées de plantes, le premier rail vertical 21 est lui-même amovible, sur un rail horizontal 22 au plafond, et peut ainsi se déplacer de droite à gauche. Il suffit donc de laisser un espace de 30cm pour que le rail et le bras 4 passent entre les rangées de plantes.

Les rails 21 sont typiquement métalliques, de préférence en acier inoxydables.

Les moyens de commande 17 comprennent :
- le casque et/ou les lunettes 10, agencés pour déplacer les moyens de visualisation 9 (typiquement en rotation) en fonction d'un mouvement (typiquement en rotation) du casque et/ou lunettes ; le casque 10 est connecté en direct à la caméra 9 déposé sur le bras 4. Bouger le casque 10 bouge la vue de la caméra 9 et permet une vision à 360° haut/bas et droite/gauche, et/ou
- des moyens (typiquement manuels) pour commander un déplacement (typiquement en translation) du bras robotisé 4 entre les différents emplacements 6, verticalement et/ou horizontalement. Les moyens 17 comprennent typiquement une manette agencée pour contrôler les moteurs sur les rails 21, 22, et permet donc au bras 4 d'aller de droite à gauche et de haut en bas.
- des moyens (typiquement manuels) pour commander une action du bras robotisé 4. Les moyens 17 comprennent typiquement :
   * une autre manette agencée pour contrôler le bras 4 et son outil 5 (par exemple pour resserrer l'outil équipé 5 (fermer les ciseaux, pincer les pinces etc.)) et/ou pour contrôler une rétractation ou non du bras 4 (typiquement sur 60cm de longueur) pour plus ou moins enfoncer le bras 4 entre les plantes d'une même rangée, et
   * une articulation en 6 axes, type poignée d'une main, agencée pour choisir avec plus de précision l'endroit où appliquer l'outil 5.

Avec ce système l'usager à une vue dans toute la ferme 3 et un accès à chaque plante ou emplacement 6.

Les moyens de visualisation 9 comprennent la caméra disposée sur le bras robotisé 4, de préférence à l'extrémité du bras robotisé 4 équipé de l'au moins un outil 5.

Les moyens de visualisation 9 sont agencés pour imager des objets en l'absence de rayonnement visible compris entre 400 et 800 nm.

Les moyens 9 comprennent typiquement une caméra infra-rouge.

L'espace de culture 3 est un espace clos. Ainsi le bras 4 n'est pas agencé pour sortir de l'espace 3, et aucun humain n'a besoin d'y entrer. Ainsi, aucun pathogène ne peut entrer dans l'espace 3 car l'espace 3 est entièrement fermé (hormis l'au moins un tiroir 13 et des aérations nécessaires qui sont traitées aux rayonnements ultra-violet).

L'espace de culture 3 comprend des moyens de régulation ou actuateurs 11 et/ou des moyens de mesure ou senseurs 12 d'au moins un paramètre physique au sein de cet espace de culture 3, tel qu'une température, une humidité, un taux de CO₂, une mesure de spectrométrie, une luminosité, et/ou un taux d'éthylène.

L'espace de culture 3 comprend des moyens électroniques 16 dits mobiles, aussi appelée carte mobile 16.

L'espace de culture 3 comprend des moyens électroniques 18 dits statiques, aussi appelée carte statique 18.

Typiquement, chacune des cartes 16, 18 comprend au moins un ordinateur, une unité centrale ou de calcul, un circuit électronique analogique (de préférence dédié), un circuit électronique numérique (de préférence dédié), et/ou un microprocesseur (de préférence dédié), et/ou des moyens logiciels.

La carte mobile 16 est appelée ainsi, car elle est associée au bras robotique 4 mobile.

La carte 16 est agencée pour servir d'interface entre les senseurs 12 et les moyens de communication 8, 81. Les senseurs 12 peuvent ainsi être au plus proche ou en contact de chaque plante.

La carte 16 envoie les données des senseurs 12 sur le Cloud 81.

La carte 16 indique les seuils (minimum et maximum) d'activation des actuateurs 11 à la carte statique 18.

La carte 16 pilote le bras motorisé 4.

La carte mobile 16 est typiquement une carte de référence « Raspberry Pi Zero W » ^{®}.

Les senseurs 12 comprennent typiquement :
- un capteur de CO₂, par exemple de référence T6713 de la société « Amphenol » ^{®}, et/ou
- un spectromètre, et/ou
- un capteur de température, par exemple de référence MIKROE-2937 de la société Shenzhen Feisi Diya Technology Co., Ltd., et/ou
- un capteur de luminosité, par exemple de référence MIKROE-1903 de la société Shenzhen Zhaoxing Microelectronics Co., Ltd, et/ou
- **un capteur** d'éthylène, par exemple de référence MQ-3 de la société « Waveshare ^{®} », et/ou
- un capteur d'humidité, par exemple de référence MIKROE-2937 de la société Shenzhen Feisi Diya Technology Co., Ltd..

La carte statique 18 est agencée pour activer les actuateurs 11 disséminés dans la ferme 3 quand les enregistrements des senseurs 12 le demandent. La carte 16 est agencée pour servir d'interface entre les actuateurs 11 et les moyens de communication 8 et/ou les senseurs 12.

La carte 18 contrôle l'alimentation électrique de tous les éléments de la ferme 3.

Les actuateurs 11 comprennent typiquement une pompe à CO₂, des moyens de régulation de la température (un climatiseur et/ou un chauffage), des moyens de régulation de la luminosité (i.e. des moyens de contrôle des sources 14), des moyens de régulation de l'humidité (i.e. typiquement pompe de circulation d'air à l'humidité contrôlée et/ou diffuseur d'humidité), et/ou des moyens de régulation de CO₂ ou d'éthylène (i.e. typiquement pompe de circulation d'air frais et/ou source de CO₂ et/ou d'éthylène).

La carte 18 est typiquement une carte de référence « DEV-13907 SparkFun ESP32 Thing ».

Les moyens d'affichage 10 sont en outre agencés pour afficher l'au moins un paramètre physique mesuré.

L'espace de culture 3 comprend au moins un tiroir 13. Chaque tiroir 13 est agencé pour passer entre :
- une position interne pour lequel le contenant du tiroir 13 est accessible depuis l'intérieur de cet espace de culture 3 mais inaccessible depuis l'extérieur de cet espace de culture 3, et
- une position externe pour lequel le contenant du tiroir 13 est accessible depuis l'extérieur de cet espace de culture 3 mais inaccessible depuis l'intérieur de cet espace de culture 3,

le bras robotisé 4 de cet espace de culture 3 étant agencé pour cueillir plantes et/ou produits dans cet espace de culture 3 et les déposer dans le contenant du tiroir 13 dans sa position interne
le tiroir 13 comprenant en outre des moyens de stérilisation agencés pour stériliser le contenant et/ou le contenu du tiroir 13, de préférence par rayonnement ultra-violet (i.e. par au moins une longueur d'onde comprise entre 10 nm et 380 nm, de préférence entre 180 nm et 380 nm), lorsque le tiroir 13 passe de sa position externe à sa position interne.

Cette décontamination est donc agencée pour détruire des bactéries et/ou virus à l'intérieur du tiroir 13.

L'au moins un tiroir 13 peut comprendre :
- au moins un tiroir réfrigéré 13 i.e. agencé pour maintenir le contenant du tiroir 13 à une température inférieure à une valeur seuil ; typiquement inférieure 12°C, de préférence inférieure à 5°C, pour les plantes ou produits à conserver ou consommer, et/ou
- au moins un tiroir non réfrigéré 13, pour les déchets.

Le système 1 comprend plusieurs espaces de culture 3 distincts, le poste de commande 7 étant partagé pour tous les espaces de culture 3.

Autrement dit, le même poste de commande (7), distant de chaque espace de culture, comprend les mêmes moyens de commande (17) qui sont agencés pour commander le bras robotisé de chaque espace de culture via les moyens de communication, les moyens de commande étant agencés pour commander les moyens de déplacement de manière à déplacer le bras robotisé de cet espace de culture entre les différents emplacements de cet espace de culture et/ou pour commander des actions du bras robotisé de chaque espace de culture.

Chaque espace de culture 3 est un espace clos séparé de chacun des autres espaces de culture 3.

Chaque espace de culture 3 est distant de chacun des autres espaces de culture 3 d'une distance d'au moins 10 mètres, de préférence d'au moins 1 km, de manière plus préférentielle d'au moins 10 km.

Dans certains modes de réalisation, chaque espace de culture 3 est même distant de chacun des autres espaces de culture 3 d'une distance d'au moins 100 km ou 1000 km.

Le système 1 comprend en outre :
- des moyens 31 pour construire une base de données comprenant, pour chaque plante et/ou produit d'une plante, un suivi dans le temps (sous la forme d'un méta-film):
   * d'images de cette plante et/ou produit, et/ou
   * de paramètres physiques mesurés sur cette plante ou ce produit, et
- des moyens 32 pour déterminer un statut de cette plante ou produit et/ou une action recommandée pour cette plante ou produit à partir des données de la base de données.

Un méta-film est donc une sous partie de la base de données.

Le système comprend des moyens 33 pour analyser des actions, sur la plante ou produit, d'un utilisateur du poste de commande 7, et des moyens 34 d'apprentissage informatiques et/ou électroniques d'une action recommandée à effectuer sur une plante ou produit en fonction de son statut.

De préférence, tous les moyens 31, 32, 33, et 34 comprennent des mêmes moyens techniques 30.

Typiquement, chacun des moyens 30, 31, 32, 33 et 34 comprend au moins un ordinateur, une unité centrale ou de calcul, un circuit électronique analogique (de préférence dédié), un circuit électronique numérique (de préférence dédié), et/ou un microprocesseur (de préférence dédié), et/ou des moyens logiciels.

Les moyens 30 comprennent typiquement une Intelligence Artificielle (IA) 30 stockée dans les moyens de communication 8 (i.e. sur le Cloud 81).

Les moyens de commande 17 et/ou l'IA 30 sont agencés pour commander (le cas échéant) le bras robotisé 4 selon l'action recommandée sans intervention d'un utilisateur du poste 7.

Les moyens d'affichage 10 sont en outre agencés pour afficher le statut ou l'action recommandée concernant la plante ou produit imagé par les moyens de visualisation 10.

Chaque plante est identifiée dans l'espace de culture 3 par un code-barres.

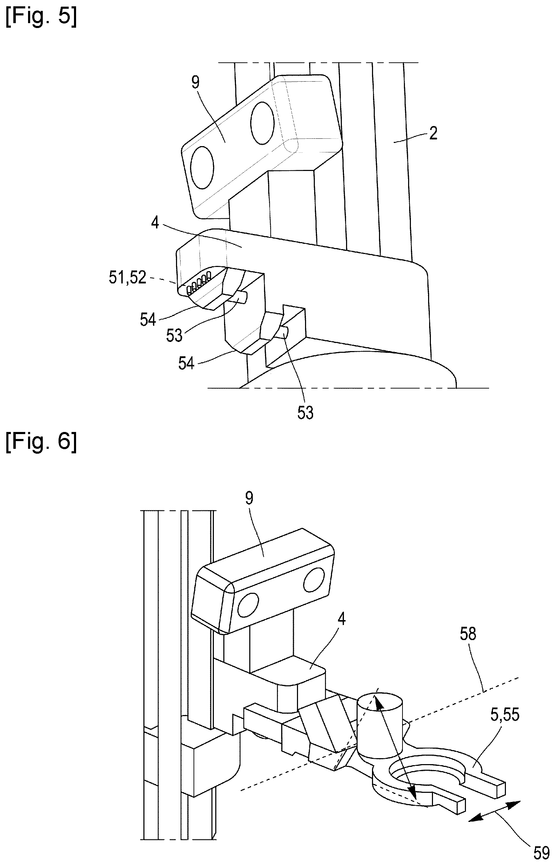

Comme illustré sur la figure 5, le bras 4 comprend un connecteur 51 agencé pour connecter et fixer un outil 5 au bras 4 parmi les différents outils 5 disponibles. Le connecteur 51 comprend des connexions électriques 52 pour alimenter électriquement et envoyer des signaux de commande à l'outil 5 connecté au bras 4. Le connecteur 51 comprend au moins un verrou 53 (typiquement verrou à bobine) pour maintenir fixé au bras 4 l'outil 5 connecté au bras 4. Le connecteur 51 comprend au moins une forme de centrage 54 pour faciliter un centrage de l'outil 5 connecté au bras 4.

L'outil 5 est interchangeable directement dans la ferme 3, ce qui permet de faire évoluer les applications du bras 4 en même temps que les applications de la ferme 3.

Un volume sur le parcours des moyens de déplacement 2, 21, 22 transportant le bras 4 est alloué au changement d'outil 5 : le bras 4 met l'outil utilisé 4 dans ce volume dédié, il s'en dissocie, puis se saisit du nouvel outil 5 avant de s'y lier.

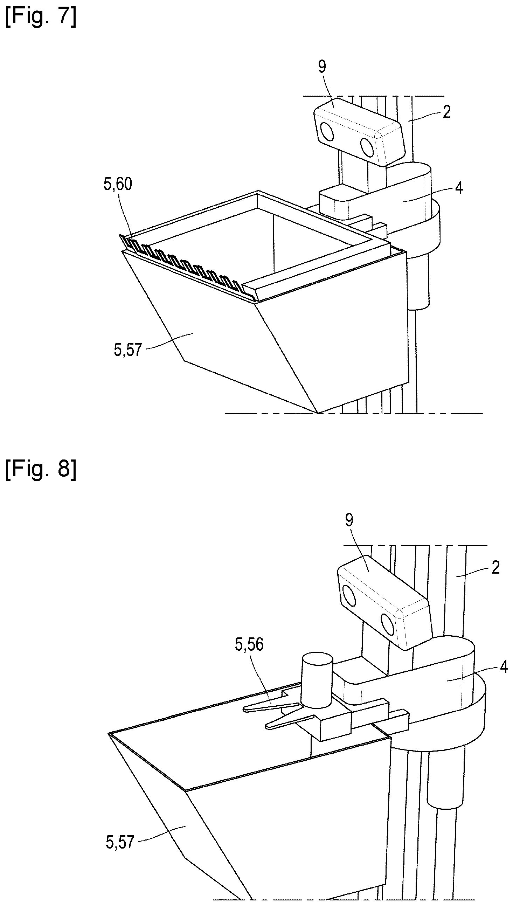

Les outils 5 disponibles dans la ferme 3 comprennent par exemple :
- des pinces 55 (comme illustré en figure 6). Un moteur permet de changer l'inclinaison de la pince 55 autour d'un axe de rotation 58. Un moteur permet de faire varier l'ouverture 59 des pinces. La pince 55 permet :
   * de saisir les paniers dans lesquels poussent les plantes pour les soulever et vérifier l'état des racines et de la plomberie
   * diverses opérations de maintenance dans la ferme 3
   * de saisir les graines dans un packaging spécial pour être saisi par cet embout. Le packaging doit simplement être déposé dans le panier de culture pour activer la germination de la graine
- des ciseaux motorisés 56 combinés à un panier 57 (comme illustré en figure 8) et/ou des lames larges motorisées 60 combinés à un panier 57 (comme illustré en figure 7) : cela permet le bouturage et la cueillette d'aromate (les aromates sont récupérés par le panier et déposés dans un tiroir 13 muni d'une glacière et destiné aux récoltes), les mauvaises herbes sont récupérées par le panier 57 et jetées (via l'au moins un tiroir 13) hors de la ferme pour ne pas les laisser pourrir.

Le bras 4 est donc capable de planter, bouturer, cueillir et entretenir par l'intermédiaire d'un pilote à distance.

On va maintenant décrire un premier mode de réalisation de procédé de culture et/ou d'apprentissage selon l'invention, mis en œuvre dans le système 1.

Ce mode de réalisation comprend les étapes suivantes pour un espace de culture 3 (aussi appelé ferme 3 dans la présente description) donné du système 1.

Cet espace de culture 3 régule (par les moyens 11) et/ou mesure (par les moyens 12) au moins un paramètre physique au sein de cet espace de culture 3, tel qu'une température, une humidité, un taux de CO₂, une mesure de spectrométrie, une luminosité, et/ou un taux d'éthylène.

Par exemple, si les conditions de croissances optimales ne correspondent pas aux conditions dans la ferme 3 (la température baisse, la lumière est éteinte trop longtemps etc.) l'IA 30 active automatiquement les actuateurs 11 disséminés dans la ferme 3 pour rétablir les conditions normales. Si cela ne change rien dans l'heure, elle déduit qu'il y a un disfonctionnement et envoie un message d'alerte à l'opérateur.

Chaque paramètre mesuré est stocké dans la base de données.

A l'étape 101 de cartographie, chaque plante est identifiée dans l'au moins un espace de culture 3 par un code-barres. La ferme 3 est organisée de façon à ce que chaque plante est repérée par un emplacement géographique 6 entré manuellement par l'utilisateur (par exemple, rangée 2, bac 3, plant 4 = tomate) depuis le poste de commande 7, et à chaque nouvelle espèce l'utilisateur (aussi appelé opérateur ou cultivateur ou fermier ou usager ou pilote dans la présente description) complète la base de données et peut entrer manuellement des informations (espèce, température optimale, luminosité requise etc.). D'autres données seront ajoutées par l'Intelligence Artificielle (AI) à mesure de son apprentissage pour cette espèce, comme expliqué par la suite.

Les moyens 9 connaissent le trajet du bras robotique 4 (auquel ils sont raccrochés) et tous les emplacements 6 de plantes possibles au sein de la ferme 3. Chacun de ces emplacements est identifié dans la base de données comme vide ou occupé. Dans le cas où une plante y pousse, le code barre l'identifiant lu par les moyens 9, permet de mentionner de façon automatique, et non manuel, emplacement, date de plantation et type de plante (exemple : rangée 2, bac 3, plant 4 = tomate cœur de bœuf, planté le 3 septembre 2019). Cela dit, l'utilisateur peut modifier/compléter la base de données manuellement.

Une étape 102 de construction d'un métafilm est mise en œuvre de manière périodique, par exemple toutes les 5h. Lors de chaque itération de l'étape 102, le bras robotique 4 parcourt automatiquement la ferme 3 et analyse chaque plante. A chaque itération de l'étape 102, on enregistre (étape 103) dans le métafilm pour chaque plante ou emplacement 6 :
- au moins une photo de la plante,
- des informations (nombre, couleur, et/ou taille) sur une reconnaissance d'au moins un produit (ledit produit étant typiquement une tige, feuille, fruit, légume, racine, oignon, et/ou fleur) de cette plante ; et/ou
- une information sur un stade ou statut de la plante (un parmi germination, végétatif, floraison, fructification, mort) ; et/ou
- une information sur une action recommandée sur la plante (un parmi rien, planter, bouturer, cueillir, jeter) ; et/ou
- des paramètres physiques relatif à la plante (mesurés par les moyens 12) : humidité, température, CO₂, maturité.

La reconnaissance d'image s'effectue par apprentissage, quand un nouvel élément apparait, l'IA 30 tente de deviner sa nature, ce à quoi l'opérateur peut répondre à distance par « oui » ou « non »
a. « Non » engendre une autre proposition par l'IA 30
b. « Oui » entraine l'enregistrement dans la matrice de la plante considérée des données de cet élément pour le reconnaitre plus tard.

Pour chaque plante, le méta-film est stocké sur le cloud 81. Ces informations concernent la croissance de la graine jusqu'à la mort pour chaque plante. Un univers virtuel peut être crée avec ces informations pour accélérer l'apprentissage de l'IA 30.

Une commande d'une action par l'utilisateur, depuis le poste de commande 7, agit sur l'espace de culture 3, cette action comprenant :
- un déplacement des moyens de visualisation 9 de cet espace de culture 3, de préférence une rotation des moyens de visualisation 9 en fonction d'un mouvement de rotation du casque et/ou des lunettes 10 porté(e)(s) par l'utilisateur, et/ou une translation des moyens de visualisation 9 (portés par le bras 4) en fonction d'un mouvement sur les moyens de commande 17 (typiquement sur le joystick) déplaçant le bras 4 et donc simultanément les moyens de visualisation 9, et/ou
- une commande, par les moyens de commande 17, du bras robotisé 4 de l'au moins un espace de culture 3 via les moyens de communication 8, comprenant :
   a) une commande (étape 104), par les moyens de commande 17, des moyens de déplacement 2 de manière à déplacer le bras robotisé 4 de cet espace de culture 3 entre les différents emplacements 6 de cet espace de culture 3 ; les moyens de commande 17 commandent un déplacement du bras robotisé 4 entre les différents emplacements 6, verticalement et/ou horizontalement, en déplaçant le bras 4 le long des rails horizontaux 22 et/ou des rails verticaux 21 et/ou
   b) une commande (étape 111), par les moyens de commande 17, d'actions du bras robotisé 4 de cet espace de culture 3, lesdites actions comprenant une manipulation, par la bras robotisé 4, des plantes et/ou de produits de ces plantes disposées dans les emplacements 6. Par exemple, le bras robotisé 4 de cet espace de culture 3 cueille des plantes et/ou produits dans cet espace de culture 3 et les dépose dans le contenant du tiroir 13 dans sa position interne ; puis le tiroir 13 passe de sa position interne à sa position externe ; puis le contenu du tiroir 13 est retiré du tiroir 13; puis le tiroir 13 passe de sa position externe à sa position interne et les moyens de stérilisation du tiroir 13 stérilisent le contenant du tiroir 13, de préférence par rayonnement ultra-Violet, lorsque le tiroir passe de sa position externe à sa position interne. Cela permet l'élimination d'éventuels contaminants avant de retourner dans la ferme 3.

Par exemple, l'opérateur commence à positionner (étape 104) le bras 4 en face d'une plante ou emplacement 6 grâce aux moyens 17.

Les moyens d'affichage 10 affichent l'au moins un paramètre physique mesuré et/ou une action recommandé (déterminée comme décrit par la suite) et/ou des données relatives à la plante en train d'être affichée sur les moyens 10.

Les informations de la base de données sont affichées sur les moyens 10 de l'opérateur lorsqu'il regarde la plante considérée avec la caméra 9 du bras robotique 4, selon un procédé de « réalité augmentée ». Il a aussi accès aux informations des senseurs 12 en temps réel : par exemple, il regarde une tomate, en haut à gauche il voit l'espèce, sa date de plantation, sa température optimale etc. en haut à droite de l'écran il voit la température actuelle de la ferme etc.

Les moyens de visualisation 9 de cet espace de culture 3 captent une image des emplacements et/ou du bras robotisé 4 de cet espace de culture 3 (même en l'absence de rayonnement visible compris entre 400 et 800 nm), et les moyens d'affichage (i.e. casque et/ou des lunettes 10) affichent cette image à un utilisateur. Ainsi la caméra 9 permet de voir la ferme 3 même la nuit (vision nocturne) sans pour autant déranger la croissance des plantes qui pourraient être réveillées avec seulement quelques photons et pourraient quitter le stade de floraison pour revenir en stage végétatif si les cycles de lumières ne sont pas respectés. Ainsi la ferme 3 est accessible n'importe quel jour de l'année et à n'importe quelle heure.

Lorsque l'opérateur regarde cette plante ou emplacement 6 via les moyens 9 et 10, l'IA 30 accède à la base de données (étape 105) puis analyse les changements dans le méta-film de cette plante depuis sa dernière connexion (étape 106) et devine (étape 107) dans quel stade la plante est (parmi les cinq susmentionnés). L'opérateur peut ensuite valider (étape 108) par « oui » ou « non » et cette information est stockée dans la base de données de la plante.

L'IA 30 propose (étape 109) ensuite une action (parmi les cinq susmentionnées) recommandée pour cette plante. L'opérateur peut ensuite valider (étape 110) par « oui » ou « non » et cette information est stockée dans la base de données de la plante. Ensuite (étape 111) :
- en cas de « oui » : l'opérateur commande, par les moyens de commande 17, l'action du bras 4 ou les moyens de commande 17 et/ou l'IA 30 commandent le bras robotisé 4 selon l'action recommandée sans intervention d'un utilisateur du poste 7
- en cas de « non » l'opérateur commande lui-même, par les moyens de commande 17, l'action du bras 4.

L'IA 30 enregistre (étape 112) ensuite le mouvement du bras robotique contrôlé par l'opérateur pour cette action (elle apprend « Comment effectuer l'action »)

Ainsi chaque plante a une sous partie de la base de données qui se remplit à mesure que les fermes 3 sont utilisées et conduira au bout de quelques années à une autonomie parfaite des fermes pour les plantes étudiées par l'IA 30.

Ainsi, ce mode de réalisation de procédé selon l'invention comprend un apprentissage, ledit apprentissage comprenant :
- une construction d'une base de données comprenant, pour chaque plante et/ou produit d'une plante, un suivi dans le temps :
   * d'images de cette plante et/ou produit, et/ou
   * de paramètres physiques mesurés sur cette plante ou ce produit,
      et
- une détermination d'un statut de cette plante ou produit et/ou une action recommandée pour cette plante ou produit à partir des données de la base de données.

L'apprentissage comprend en outre une analyse des actions, sur la plante ou produit, d'un utilisateur du poste de commande 7, et un apprentissage informatique et/ou électronique d'une action recommandée à effectuer sur une plante ou produit en fonction de son statut.

Par la suite de cet apprentissage :
- les moyens d'affichage 10 affichent en outre le statut (étape 108) ou l'action (étape 110) recommandée concernant la plante ou produit imagé par les moyens de visualisation 9 ; l'utilisateur reste dans le poste de commande 7, et est aidé dans sa décision d'actions qu'il réalise (étape 111) lui-même, ou
- les moyens de commande 17 et/ou l'IA 30 commandent le bras robotisé 4 selon l'action recommandée sans intervention d'un utilisateur ; l'utilisateur n'a alors plus besoin d'être présent dans le poste de commande 7, ce qui correspond au stade d'autonomie du système 1.

L'IA 30, pour cet apprentissage, procède à de la reconnaissance d'image, de stade, d'action à effectuer etc. le tout à partir de données obtenues sous contrôle et dont on connait le résultat recherché. L'opérateur distant observe en temps réel et peut corriger/valider le choix de l'IA 30. Il s'agit donc d'une technologie d'apprentissage de type supervisé, de préférence mis en œuvre par un réseau de neurones.

L'IA 30 fait varier ou est agencée pour faire varier les actuateurs 11 de leurs conditions initiales pour créer elle-même de nouveau jeu de données aléatoires (comme par exemple augmenter la température, augmenter le calcium, etc.). Des récompenses ou punitions lui sont allouées en fonction du résultat, dont typiquement :
- une punition si une plante est morte ou si on obtient des résultats moins satisfaisants qu'avec les conditions initiales, ou
- une récompense si la croissance de la plante est accélérée, ou si les fruits sont plus gros, plus colorés (avec ce jeu de données qualitatives, la ferme peut exercer ces expériences en autonomie).

Ces résultats permettant d'attribuer une punition ou une récompense peuvent comprendre :
- une note attribuée par l'opérateur sur le goût du produit après sa sortie de la ferme, et/ou
- une teneur d'un produit dans la plante, par exemple de l'hyperspectral pour mesurer par exemple la teneur en sucre de la plante, et /ou de la chlorophylle (dans les aromates)...

C'est un apprentissage par renforcement, pouvant utiliser une solution d'apprentissage par renforcement connu. Cet apprentissage est bien plus rapide avec un point de départ, c'est-à-dire la base de données des plantes (entrées manuellement par l'opérateur essentiellement au niveau des recettes climatiques et nutritives). Par exemple, on sait que la température de telle plante est définie à 26°C pour avoir une croissance satisfaisante et l'IA 30 peut commencer à faire varier à 27, 28 ou 24, 25°C, les résultats attendus pour chaque condition étant probablement dans une fourchette de données proche des données initiales.

Cet apprentissage par renforcement, contrairement au précédent apprentissage supervisé, permet d'induire des stress aux plantes (température trop élevée pendant un court temps, arrêt de l'arrosage, augmentation de la force du vent) et d'en déduire ceux capables d'améliorer la qualité des produits, et donc d'affiner les conditions de croissances initialement entrées.

Le poste de commande 7 est partagé pour tous les espaces de culture 3. Ainsi, chacune des étapes précédentes et/ou suivantes peut être (de préférence toutes les étapes précédentes sont) de préférence mise(s) en œuvre pour tous les espaces de culture 3.

Notamment, le procédé comprend les étapes suivantes :
- une commande, par les mêmes moyens de commande appartenant au même poste de commande 7, du bras robotisé de chaque espace de culture via les moyens de communication, comprenant :
   a) une commande, par les moyens de commande, des moyens de déplacement de manière à déplacer le bras robotisé de chaque espace de culture entre les différents emplacements de cet espace de culture et/ou
   b) une commande, par les moyens de commande, d'actions du bras robotisé de chaque espace de culture, lesdites actions comprenant une manipulation, par la bras robotisé, des plantes et/ou de produits de ces plantes disposées dans les emplacements.

A l'aide de ce système 1, un même utilisateur cultivateur (typiquement formé en France) peut dans le confort de son bureau s'occuper de multiples espaces de cultures 3 disséminés n'importe où dans le monde à condition qu'une connexion internet permettent d'accéder à ces espaces 3. Les fermes 3 sont connectées entre elles, et partagent le software (l'IA 30) présent sur le cloud 81. Ainsi plus il y a de fermes 3, plus l'apprentissage est rapide.

Les fermes 3 sont connectées entre elles par wifi.

Le bras 4 et la caméra 9 communiquent par wifi avec le casque 10 de réalité virtuelle sur lequel est diffusé un signal en direct (« live feed » en anglais) via une application de réalité virtuelle (VR) codé dans l'environnement de développement du casque de réalité virtuel 10 (qui est typiquement un casque de modèle « oculus rift »).

Le « live feed » de chaque caméra 9 est envoyé sur le cloud 8, 81 ainsi que les informations des senseurs 12.

C'est sur le cloud 8, 81 que les calculs sont effectués par l'IA 30 et la base de données stockée. Puis, du cloud 8, 81 l'information est envoyée sur le casque à réalité virtuelle 10 pour donner à l'utilisateur l'opportunité de voir la plante en 3D et d'agir dessus par le biais des manettes 17. Sur la vidéo envoyée sur le casque à réalité virtuelle 10 sont superposées les informations qui aident à la prise de décision de l'opérateur (relevé d'éthylène, du spectromètre, analyse de l'IA 30: santé de la plante, stade de la plante, taille du fruit, poids de celui-ci évaluée par le bras robotique etc.)

Bien sûr, l'invention n'est pas limitée aux exemples qui viennent d'être décrits et de nombreux aménagements peuvent être apportés à ces exemples sans sortir du cadre de l'invention.

## Revendications

1. Système (1) de culture, comprenant :
- au moins un espace de culture (3), notamment clos, comprenant :
* différents emplacements (6) pour des plantes,
* un bras robotisé (4) équipé d'au moins un outil (5)
* des moyens de déplacement (2) agencés pour déplacer le bras robotisé entre ces différents emplacements
- des moyens de communication (8) électroniques et/ou informatiques,
- un poste de commande (7) distant de l'au moins un espace de culture et comprenant des moyens de commande (17) agencés pour commander le bras robotisé de chaque espace de culture via les moyens de communication, les moyens de commande étant agencés pour commander les moyens de déplacement de manière à déplacer le bras robotisé de cet espace de culture entre les différents emplacements de cet espace de culture et/ou pour commander des actions du bras robotisé de cet espace de culture, le système de culture comprenant en outre :
- des moyens (30) pour construire une base de données comprenant, pour chaque plante et/ou produit d'une plante , un suivi dans le temps :
* d'images de cette plante et/ou produit, et/ou
* de paramètres physiques mesurés sur cette plante ou ce produit, et
- des moyens (30) pour déterminer un statut de cette plante ou produit et/ou une action recommandée pour cette plante ou produit à partir des données de la base de données,
- des moyens (30) pour analyser des actions, sur la plante ou produit, d'un utilisateur du poste de commande,
- des moyens (30) d'apprentissage informatiques et/ou électroniques d'une action recommandée à effectuer sur une plante ou produit en fonction de son statut,
le système de culture étant **caractérisé en ce qu'**il comprend en outre :
- des moyens (30) pour commander le bras robotisé (4) selon l'action recommandée sans intervention d'un utilisateur.

2. Système selon la revendication 1, **caractérisé en ce que** chaque espace de culture comprend en outre des moyens de visualisation (9) agencés pour capter une image des emplacements et/ou du bras robotisé de cet espace de culture, le poste de commande comprenant des moyens d'affichage (10) agencés pour afficher cette image, tels qu'un casque et/ou des lunettes agencés notamment pour déplacer les moyens de visualisation en fonction d'un mouvement du casque et/ou lunettes.

3. Système selon la revendication 2, **caractérisé en ce que** les moyens de visualisation comprennent une caméra disposée sur le bras robotisé, de préférence à l'extrémité du bras robotisé équipé de l'au moins un outil.

4. Système selon l'une quelconque des revendications 2 et 3, **caractérisé en ce que** les moyens de visualisation sont agencés pour capter une image des emplacements selon un angle solide d'au moins 2n stéradians, de préférence selon un angle solide de 4n stéradians.

5. Système selon l'une quelconque des revendications précédentes, **caractérisé en ce que** l'au moins un espace de culture est un espace de culture vertical, comprenant au moins un empilement vertical d'emplacements pour des plantes, de préférence plusieurs rangées d'empilements verticaux d'emplacements pour des plantes.

6. Système selon l'une quelconque des revendications précédentes, **caractérisé en ce que** les moyens de déplacement comprennent des rails (21, 22) horizontaux et/ou verticaux le long desquels le bras robotisé est agencé pour se déplacer.

7. Système selon l'une quelconque des revendications précédentes, **caractérisé en ce que** l'au moins un espace de culture comprend des moyens de régulation (11) et/ou des moyens de mesure (12) d'au moins un paramètre physique au sein de cet espace de culture, tel qu'une température, une humidité, un taux de CO₂, une mesure de spectrométrie, une luminosité, et/ou un taux d'éthylène.

8. Système selon la revendication 7 considérée comme dépendante de l'une quelconque des revendications 2 à 4, **caractérisé en ce que** les moyens d'affichage sont en outre agencés pour afficher l'au moins un paramètre physique mesuré.

9. Système selon l'une quelconque des revendications précédentes, **caractérisé en ce que** chaque espace de culture comprend un tiroir (13) agencé pour passer entre :
- une position interne pour lequel le contenant du tiroir est accessible depuis l'intérieur de cet espace de culture mais inaccessible depuis l'extérieur de cet espace de culture, et
- une position externe pour lequel le contenant du tiroir est accessible depuis l'extérieur de cet espace de culture mais inaccessible depuis l'intérieur de cet espace de culture le bras robotisé de cet espace de culture étant agencé pour cueillir plantes et/ou produits dans cet espace de culture et les déposer dans le contenant du tiroir dans sa position interne le tiroir comprenant en outre des moyens de stérilisation agencés pour stériliser le contenant du tiroir, de préférence par rayonnement ultra-violet, lorsque le tiroir passe de sa position externe à sa position interne.

10. Système selon l'une quelconque des revendications précédentes, **caractérisé en ce qu'**il comprend plusieurs espaces de culture distincts, le poste de commande étant partagé pour tous les espaces de culture.

11. Système selon l'une quelconque des revendications 1 à 10 considérée comme dépendante de l'une quelconque des revendications 2 et 3, **caractérisé en ce que** les moyens d'affichage sont en outre agencés pour afficher le statut ou l'action recommandée concernant la plante ou produit imagé par les moyens de visualisation.

12. Système selon l'une quelconque des revendications précédentes, **caractérisé en ce que** chaque plante est identifiée dans l'au moins un espace de culture par un code-barres.

13. Procédé de culture, mis en œuvre dans un système (1) de culture selon l'une quelconque des revendications 1 à 12, ledit procédé comprenant les étapes suivantes
- une commande, par les moyens de commande, du bras robotisé de l'au moins un espace de culture via les moyens de communication, comprenant :
a) une commande, par les moyens de commande, des moyens de déplacement de manière à déplacer le bras robotisé de cet espace de culture entre les différents emplacements de cet espace de culture et/ou
b) une commande, par les moyens de commande, d'actions du bras robotisé de cet espace de culture, lesdites actions comprenant une manipulation, par la bras robotisé, des plantes et/ou de produits de ces plantes disposées dans les emplacements,
- une construction d'une base de données comprenant, pour chaque plante et/ou produit d'une plante , un suivi dans le temps :
* d'images de cette plante et/ou produit, et/ou
* de paramètres physiques mesurés sur cette plante ou ce produit, et
- une détermination d'un statut de cette plante ou produit et/ou une action recommandée pour cette plante ou produit à partir des données de la base de données,
- une analyse des actions, sur la plante ou produit, d'un utilisateur du poste de commande,
- un apprentissage informatique et/ou électronique d'une action recommandée à effectuer sur une plante ou produit en fonction de son statut,
le procédé de culture étant **caractérisé en ce qu'**il comprend en outre :
- une commande, par les moyens de commande, du bras robotisé selon l'action recommandée sans intervention d'un utilisateur.

## Patentansprüche

1. Anzuchtsystem (1), umfassend:
- mindestens einen, insbesondere geschlossenen, Zuchtraum (3), umfassend:
* verschiedene Stellen (6) für Pflanzen,
* einen Roboterarm (4), der mit mindestens einem Werkzeug (5) ausgestattet ist
* Verschiebemittel (2), die angeordnet sind, um den Roboterarm zwischen diesen verschiedenen Stellen zu bewegen
- elektronische und/oder IT-Kommunikationsmittel (8),
- eine Steuerzentrale (7), die vom wenigstens einen Anzuchtraum entfernt ist und Steuermittel (17) umfasst, die angeordnet sind, um den Roboterarm jedes Anzuchtraumes über die Kommunikationsmittel zu steuern, wobei die Steuermittel angeordnet sind, um die Verschiebemittel zu steuern, um den Roboterarm dieses Anzuchtraumes zwischen den verschiedenen Stellen dieses Anzuchtraumes zu verschieben und/oder um Aktionen des Roboterarmes dieses Anzuchtraumes zu steuern, wobei das Anzuchtsystem weiter umfasst:
- Mittel (30), um eine Datenbank aufzubauen, die für jede(s) Pflanze und/oder Produkt einer Pflanze eine zeitabhängige Aufzeichnung umfasst:
* von Bildern dieser Pflanze und/oder dieses Produkts und/oder
* von an dieser Pflanze oder diesem Produkt gemessenen physikalischen Parametern und
- der Mittel (30), um einen Zustand dieser Pflanze oder dieses Produkts und/oder eine empfohlene Maßnahme für diese Pflanze oder dieses Produkt aus den Daten der Datenbank zu bestimmen,
- der Mittel (30) zur Analyse von Maßnahme, an der Pflanze oder am Produkt, eines Benutzers der Steuerzentrale,
- Mittel zum IT-gestützten und/oder elektronischen Lernen (30) einer empfohlenen Maßnahme, die an einer Pflanze oder einem Produkt in Abhängigkeit von ihrem Zustand durchzuführen ist,
wobei das Anzuchtsystem **dadurch gekennzeichnet ist, dass** es weiter umfasst:
- Mittel (30), um den Roboterarm (4) gemäß der empfohlenen Maßnahme ohne Eingriff eines Benutzers zu steuern.

2. System nach Anspruch 1, **dadurch gekennzeichnet, dass** jeder Anzuchtraum weiter Visualisierungsmittel (9) umfasst, die angeordnet sind, um ein Bild der Stellen und/oder des Roboterarms dieses Anzuchtraumes zu erfassen, wobei die Steuerzentrale Anzeigemittel (10), die angeordnet sind, um dieses Bild anzuzeigen, wie einen Helm und/oder eine Brille umfasst, die insbesondere angeordnet sind, um die Visualisierungsmittel in Abhängigkeit von einer Bewegung des Helms und/oder der Brille zu verschieben.

3. System nach Anspruch 2, **dadurch gekennzeichnet, dass** die Visualisierungsmittel eine am Roboterarm, vorzugsweise am Ende des Roboterarms, der mit dem mindestens einen Werkzeug ausgestattet ist, angeordnete Kamera umfassen.

4. System nach einem der Ansprüche 2 und 3, **dadurch gekennzeichnet, dass** die Visualisierungsmittel angeordnet sind, um ein Bild der Stellen in einem festen Winkel von mindestens 2π Steradiant, vorzugsweise in einem festen Winkel von 4n Steradiant, zu erfassen.

5. System nach einem der vorstehenden Ansprüche, **dadurch gekennzeichnet, dass** der mindestens eine Anzuchtraum ein vertikaler Anzuchtraum ist, der mindestens einen vertikalen Stapel von Stellen für Pflanzen, vorzugsweise mehrere Reihen vertikaler Stapel von Stellen für Pflanzen umfasst.

6. System nach einem der vorstehenden Ansprüche, **dadurch gekennzeichnet, dass** die Verschiebemittel horizontale und/oder vertikale Schienen (21, 22) umfassen, entlang derer der Roboterarm angeordnet ist, um sich zu verschieben.

7. System nach einem der vorstehenden Ansprüche, **dadurch gekennzeichnet, dass** der mindestens eine Anzuchtraum Regelungsmittel (11) und/oder Messmittel (12) mindestens eines physikalischen Parameters innerhalb dieses Anzuchtraumes, wie eine Temperatur, eine Luftfeuchtigkeit, einen CO₂-Gehalt, eine Spektroskopiemessung, eine Helligkeit und/oder einen Ethylengehalt umfasst.

8. System nach Anspruch 7, als abhängig von einem der Ansprüche 2 bis 4 angesehen, **dadurch gekennzeichnet, dass** die Anzeigemittel weiter angeordnet sind, um den mindestens einen gemessenen physikalischen Parameter anzuzeigen.

9. System nach einem der vorstehenden Ansprüche, **dadurch gekennzeichnet, dass** jeder Anzuchtraum eine Schublade (13) umfasst, die angeordnet ist, zwischen einer inneren und einer äußeren Position umzuschalten
- einer inneren Position, bei welcher der Behälter der Schublade von innerhalb dieses Anzuchtraumes zugänglich, jedoch von außerhalb dieses Anzuchtraumes nicht zugänglich ist, und
- einer äußeren Position, bei welcher der Behälter der Schublade von außerhalb dieses Anzuchtraumes zugänglich, jedoch von innerhalb dieses Kulturraums nicht zugänglich ist, wobei der Roboterarm dieses Anzuchtraumes angeordnet ist, um Pflanzen und/oder Produkte in diesem Anzuchtraum zu aufzunehmen und sie in den Behälter der Schublade in seiner inneren Position abzulegen, wobei die Schublade weiter Sterilisationsmittel umfasst, die angeordnet sind, um den Behälter der Schublade vorzugsweise durch UV-Strahlung zu sterilisieren, wenn die Schublade von ihrer äußeren in ihre innere Position übergeht.

10. System nach einem der vorstehenden Ansprüche, **dadurch gekennzeichnet, dass** es mehrere getrennte Anzuchtraume umfasst, wobei die Steuerzentrale für alle Anzuchtraume gemeinsam genutzt wird.

11. System nach einem der Ansprüche 1 bis 10, als abhängig von einem der Ansprüche 2 und 3 angesehen, **dadurch gekennzeichnet, dass** die Anzeigemittel weiter angeordnet sind, um den Zustand oder die empfohlene Maßnahme bezüglich der Pflanze oder des Produkts anzuzeigen, die/das von den Visualisierungsmitteln abgebildet wird.

12. System nach einem der vorstehenden Ansprüche, **dadurch gekennzeichnet, dass** jede Pflanze in dem mindestens einen Anzuchtraum durch einen Barcode identifiziert wird.

13. Zuchtverfahren, das in einem Anzuchtsystem (1) nach einem der Ansprüche 1 bis 12 umgesetzt, wobei das Verfahren die folgenden Schritte umfasst
- eine Steuerung durch die Steuermittel des Roboterarmes des mindestens einen Anzuchtraumes über die Kommunikationsmittel, umfassend:
a) eine Steuerung, durch die Steuermittel, der Verschiebemittel, um den Roboterarm dieses Anzuchtraumes zwischen den verschiedenen Stellen dieses Anzuchtraumes zu verschieben und/oder
b) eine Steuerung, durch die Steuermittel, von Maßnahmen des Roboterarms dieses Anzuchtraumes, wobei die Maßnahmen eine Handhabung, durch den Roboterarm, der Pflanzen und/oder von Produkten dieser Pflanzen umfassen, die an den Stellen angeordnet sind,
- einen Datenbank aufzubauen, die für jede Pflanze und/oder jedes Pflanzenprodukt eine zeitabhängige Aufzeichnung umfasst:
* von Bildern dieser Pflanze und/oder dieses Produkts und/oder
* von an dieser Pflanze oder diesem Produkt gemessenen physikalischen Parametern und
- einer Bestimmung eines Zustands dieser Pflanze oder dieses Produkts und/oder eine empfohlene Maßnahme für diese Pflanze oder dieses Produkt aus den Daten der Datenbank,
- einer Analyse der von einem Benutzer der Steuerzentrale an der Pflanze oder am Produkt durchgeführten Maßnahmen,
- einem IT- und/oder elektronischen Lernen einer empfohlenen Maßnahme, die an einer Pflanze oder einem Produkt in Abhängigkeit von ihrem Zustand durchzuführen ist,
wobei das Zuchtverfahren **dadurch gekennzeichnet ist, dass** es weiter umfasst:
- eine Steuerung durch die Steuermittel des Roboterarmes gemäß der empfohlenen Maßnahme ohne Eingriff eines Benutzers.

## Claims

1. A growing system (1), comprising:
- at least one growing space (3) comprising:
* different locations (6) for plants,
* a robotic arm (4) equipped with at least one tool (5),
* moving means (2) configured to move the robotic arm between these different locations,
- electronic and/or computer communication means (8),
- a control station (7) remote from the at least one growing space and comprising control means (17) configured to control the robotic arm of each growing space via the communication means, the control means being configured to control the moving means so as to move the robotic arm of this growing space between the different locations of this growing space and/or to control actions of the robotic arm of this growing space;
wherein the growing system further comprises:
- means (30) for constructing a database comprising, for each plant and/or plant product, a time-based record:
* of images of said plant and/or product, and/or
* of physical parameters measured on said plant or product,
- means (30) for determining a status of said plant or product and/or a recommended action for said plant or product based on data from the database,
- means (30) for analyzing actions taken by a user of the control station on the plant or product,
- computer and/or electronic learning means (30) for determining a recommended action to be taken on a plant or product based on its status,
wherein the growing system is **characterized in that** it further comprises:
- means (30) for controlling the robotic arm (4) to perform the recommended action without user intervention.

2. The system according to claim 1, wherein each cultivation space further comprises viewing means (9) arranged to capture an image of the locations and/or of the robotic arm of this growing space, the control station comprising display means (10) arranged to display this image, such as a helmet and/or the glasses configured in particular to move the viewing means according to a movement of the helmet and/or glasses.

3. The system according to claim 2, wherein the viewing means comprise a camera arranged on the robotic arm, preferably at the end of the robotic arm (4) which is equipped with the at least one tool.

4. The system according to any one of claims 2 or 3, wherein the viewing means are configured to capture an image of the locations at a solid angle of at least 2π steradian, preferably at a solid angle of 4π steradian.

5. The system according to any one of the preceding claims, wherein the at least one growing space is a vertical growing space, comprising at least one vertical stack of plant locations, preferably several rows of vertical stacks of plant locations.

6. The system according to any one of the preceding claims, wherein the moving means comprise horizontal rails and/or vertical rails (21, 22) along which the robotic arm is arranged to move.

7. The system according to any one of the preceding claims, wherein the at least one growing space comprises means for regulating (11) and/or means for measuring (12) at least one physical parameter within this growing space, such as a temperature, a humidity, a CO₂ rate, a spectrometric measurement, a luminosity, and/or an ethylene rate.

8. The system according to claim 7 as dependent on any one of claims 2 to 4, wherein the display means are configured to display the at least one measured physical parameter.

9. The system according to any one of the preceding claims, wherein each growing space includes a drawer (13) configured to switch between:
- an internal position for which the container of the drawer is accessible from inside this growing space but inaccessible from outside this growing space, and
- an external position for which the container of the drawer is accessible from outside this growing space but inaccessible from inside this growing space, the robotic arm of this growing space being configured to pick plants and/or products in this growing space and deposit them in the container of the drawer in its internal position, the drawer further comprising sterilization means configured to sterilize the container of the drawer, preferably by ultraviolet radiation, when the drawer passes from its external position to its internal position.

10. The system according to any one of the preceding claims, wherein it comprises several distinct growing spaces, the control station being shared for all the growing spaces.

11. The system according to any one of claims 1 to 10 as dependent on any one of claims 2 or 3, wherein the display means are further configured to display the status or the recommended action regarding the plant or product imaged by the viewing means.

12. The system according to any one of the preceding claims, wherein each plant is identified within the at least one growing space by a barcode.

13. A cultivation method implemented in a growing system (1) according to any one of claims 1 to 12, the method comprising the following steps:
- controlling, via the control means, the robotic arm of the at least one growing space through the communication means, comprising:
a) controlling, via the control means, the moving means to move the robotic arm within said growing space between different locations, and/or
b) controlling, via the control means, actions of the robotic arm within said cultivation space, said actions comprising manipulation by the robotic arm of plants and/or plant products placed in the locations;
- constructing a database comprising, for each plant and/or plant product, a time-based record:
* of images of said plant and/or product, and/or
* of physical parameters measured on said plant or product;
- determining a status of said plant or product and/or a recommended action for said plant or product based on the database data;
- analyzing actions taken by a user of the control station on the plant or product;
- computer and/or electronic learning of a recommended action to be taken on a plant or product depending on its status;
wherein the cultivation method is **characterized in that** it further comprises:
- controlling, via the control means, the robotic arm based on the recommended action without user intervention.
